# EUROPEAN PATENT SPECIFICATION

(11) **EP 4 316 150 B1**
(45) Date of publication and mention of the grant of the patent: **09.09.2026**
(21) Application number: 21933917.3
(22) Date of filing: 01.04.2021
(51) Int. Cl.: H04W 74/08, H04W 74/0833, H04W 76/27

(54) **METHOD AND DEVICE FOR HANDLING OF SRBS IN SMALL DATA TRANSMISSION**
VERFAHREN UND VORRICHTUNG ZUR SRBS-HANDHABUNG BEI DER ÜBERTRAGUNG KLEINER DATENMENGEN
PROCÉDÉ ET DISPOSITIF DE TRAITEMENT DE SRB DANS UNE TRANSMISSION DE PETITES DONNÉES

(43) Date of publication of application: 07.02.2024
(73) Proprietor: Lenovo (Beijing) Limited, Beijing 100085 (CN)
(72) Inventor: YUE, Ran, Beijing 100191 (CN); WU, Lianhai, Beijing 100028 (CN); HAN, Jing, Beijing 100124 (CN); WANG, Haiming, Beijing 100011 (CN)
(74) Representative: Openshaw & Co.
(86) International application number: PCT/CN2021/084799
(87) International publication number: WO 2022/205257

(56) References cited:
- WO-A1-2020/256420
- CN-A- 111 800 888
- INTERDIGITAL, APPLE, HUAWEI, HISILICON, INTEL CORPORATION, LENOVO, MOTOROLA: "Support of SRB transmission using SDT", 3GPP DRAFT; R2-2102086, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. 20210125 - 20210205, 10 February 2021 (2021-02-10), Mobile Competence Centre ; 650, route des Lucioles ; F-06921 Sophia-Antipolis Cedex ; France, XP051977916
- INTERDIGITAL ET AL: "Motivation for revision of Rel-17 WID for NR Small Data", vol. TSG RAN, no. 20210316 - 20210321, 15 March 2021 (2021-03-15), XP051985779, Retrieved from the Internet <URL:https://ftp.3gpp.org/tsg_ran/TSG_RAN/TSGR_91e/Docs/RP-210428.zip RP-210428.docx> [retrieved on 20210315]
- HUAWEI ET AL: "User plane common aspects for SDT", vol. RAN WG2, no. E-meeting; 20210125 - 20210205, 15 January 2021 (2021-01-15), XP051974158, Retrieved from the Internet <URL:https://ftp.3gpp.org/tsg_ran/WG2_RL2/TSGR2_113-e/Docs/R2-2101183.zip R2-2101183 User plane common aspects for SDT.docx> [retrieved on 20210115]
- ERICSSON: "CP aspects for SDT", vol. RAN WG2, no. Electronic meeting; 20210125 - 20210205, 14 January 2021 (2021-01-14), XP051972840, Retrieved from the Internet <URL:https://ftp.3gpp.org/tsg_ran/WG2_RL2/TSGR2_113-e/Docs/R2-2101177.zip R2-2101177 CP aspects for SDT.docx> [retrieved on 20210114]
- ERICSSON SAMSUNG ELECTRONICS CO LTD: "Views on Rel-17 NR Positioning And SDT WIDs", vol. TSG RAN, no. Electronic Meeting; 20210316 - 20210326, 15 March 2021 (2021-03-15), XP051985838, Retrieved from the Internet <URL:https://ftp.3gpp.org/tsg_ran/TSG_RAN/TSGR_91e/Docs/RP-210488.zip RP-210488 view on rel17 NR positioning.pptx> [retrieved on 20210315]
- HUAWEI, HISILICON: "SDT aspects common for RACH-based and CG-based SDT scheme", 3GPP DRAFT; R2-2009930, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Online; 20201102 - 20201113, 23 October 2020 (2020-10-23), Mobile Competence Centre ; 650, route des Lucioles ; F-06921 Sophia-Antipolis Cedex ; France , XP051942700
- INTERDIGITAL, APPLE, HUAWEI, HISILICON, INTEL CORPORATION, LENOVO, MOTOROLA: "Support of SRB transmission using SDT", 3GPP DRAFT; R2-2102086, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. 20210125 - 20210205, 10 February 2021 (2021-02-10), Mobile Competence Centre ; 650, route des Lucioles ; F-06921 Sophia-Antipolis Cedex ; France , XP051977916

## Description

### FIELD

The subject matter disclosed herein generally relates to wireless communications, and more particularly relates to method and apparatus for handling of signaling radio bearers (SRBs) in small data transmission (SDT), and in particular, to calculation of data volumes for initiating SDT.

### BACKGROUND

The following abbreviations are herewith defined, at least some of which are referred to within the following description: New Radio (NR), Very Large Scale Integration (VLSI), Random Access Memory (RAM), Read-Only Memory (ROM), Erasable Programmable Read-Only Memory (EPROM or Flash Memory), Compact Disc Read-Only Memory (CD-ROM), Local Area Network (LAN), Wide Area Network (WAN), User Equipment (UE), Evolved Node B (eNB), Next Generation Node B (gNB), Uplink (UL), Downlink (DL), Central Processing Unit (CPU), Graphics Processing Unit (GPU), Field Programmable Gate Array (FPGA), Orthogonal Frequency Division Multiplexing (OFDM), Radio Resource Control (RRC), User Entity/Equipment (Mobile Terminal), buffer status report (BSR), power headroom report (PHR) small data transmission (SDT), Medium Access Control (MAC), MAC control element (MAC CE), service data adaptation protocol (SDAP), packet data convergence protocol (PDCP), radio link control (RLC), core network (CN), control plane (CP), data radio bearer (DRB), logical channel priority (LCP), non access stratum (NAS), radio bearer (RB), positioning reference signal (PRS), signaling radio bearer (SRB), long term evolution (LTE), machine type communications (MTC), massive machine type communications (mMTC), Internet of things (IoT), information element (IE), dedicated control channel (DCCH), common control channel (CCCH), radio access network (RAN), next-generation radio access network (NG-RAN), ultra-reliable low-latency communication (URLLC), access stratum (AS), E-UTRAN new radio dual connectivity (EN-DC), random access channel (RACH), timing advance (TA), protocol data unit (PDU), tracking area update (TAU), beam failure recovery (BFR), listen-before-talk (LBT), configured grant (CG).

There are two RRC states for 4G LTE: RRC_IDLE and RRC_CONNECTED. 5G NR introduces a new RRC state, RRC_INACTIVE. In the RRC_INACTIVE state, the terminal is in a power-saving sleep state, but it still retains part of the RAN context (security context, UE capability information, etc.), always remains connected to the network, and can be quickly awakened by a message to transfer from the RRC_INACTIVE state to the RRC_CONNECTED state. This mechanism can reduce signaling overhead, enable fast access, reduce time delay, and save power. The current Rel-17 will support direct transmission of small data packets in the RRC_INACTIVE state, which can reduce power consumption to the greatest extent. This is very useful for some industrial IoT applications (such as sensor upgrades) and chat applications on smartphones.

The RRC connection process will establish the RBs available for usage by RRC messages on the Dedicated Control Channel (DCCH) and Common Control Channel (CCCH). These radio bearers are identified as a SRB. SRBs are used for the transmission of RRC and NAS messages. As per 3GPP specification TS38.331, there are four different types of SRB in 5G New Radio (NR), i.e., SRB0, SRB1 SRB2 and SRB3.

It has been agreed that configuring of SRB1 and SRB2 for SDT for carrying RRC and NAS messages should be supported and upon initiating RRC Resume procedure for a SDT (i.e., for first SDT transmission), the UE shall also resume SRB2 that is configured for SDT, in addition to DRBs that are configured for SDT. However, the details on the transmission have not been discussed.

Interdigital et al: "Support of SRB transmission using SDT", 3GPP draft; R2-2102086, (2021-02-10) discusses support for transport of NAS message with SDT and its applications. Interdigital et al: "Motivation for revision of Rel-17 WID for NR Small Data", 3GPP draft; RP-210428, (2021-03-15) presents motivation for revising the Rel-17 WID for NR small data transmission to clarify support for transmission of such positioning information as part of the small data framework. Huawei et al: "User plane common aspects for SDT", 3GPP draft; R2-2101183, (2021-01-15) discusses the user plane common aspects for small data transmission using both random access based schemes and CG based scheme. Ericsson: "CP aspects for SDT", 3GPP draft; R2-2101177, (2021-01-14) discusses RRC configuration details and general principles for SDT. Ericsson Samsung Electronics Co Ltd: "Views on Rel-17 NR Positioning And SDT WIDs", 3GPP draft; RP-210488, (2021-03-15) sets out open questions relating to RAN2-113e.

This invention discloses methods and apparatuses for handling of SRBs in SDT to solve the above and other technical problems.

### BRIEF SUMMARY

Methods and apparatuses for disabling uplink transmission within disabling period are disclosed. The invention is as defined by the appended claims, any other reference to embodiment in the description is solely for the sake of understanding the invention.

There is provided an apparatus according to claim 1 and a method according to claim 6.

### BRIEF DESCRIPTION OF THE DRAWINGS

A more particular description of the embodiments will be rendered by refer to specific embodiments that are illustrated in the appended drawings. Understanding that these drawings depict only some embodiments, and are not therefore to be considered to be limiting of scope, the embodiments will be described and explained with additional specificity and detail through the use of the accompanying drawings, in which:
Fig. 1 illustrates the RRC states in NR;
Fig. 2 illustrates a flowchart of a method performed by the terminal device according to an embodiment;
Fig. 3 illustrates a flowchart for a UE to decide whether a SRB may initiate a SDT according to an embodiment; and
Fig. 4 is a schematic block diagram illustrating apparatuses according to an embodiment.

### DETAILED DESCRIPTION

As will be appreciated by one skilled in the art that certain aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may generally all be referred to herein as a "circuit", "module" or "system". Furthermore, embodiments may take the form of a program product embodied in one or more computer readable storage devices storing machine-readable code, computer readable code, and/or program code, referred to hereafter as "code". The storage devices may be tangible, non-transitory, and/or non-transmission. The storage devices may not embody signals. In a certain embodiment, the storage devices only employ signals for accessing code.

Certain functional units described in this specification may be labeled as "modules", in order to more particularly emphasize their independent implementation. For example, a module may be implemented as a hardware circuit comprising custom very-large-scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but, may include disparate instructions stored in different locations which, when joined logically together, include the module and achieve the stated purpose for the module.

Indeed, a module of code may contain a single instruction, or many instructions, and may even be distributed over several different code segments, among different programs, and across several memory devices. Similarly, operational data may be identified and illustrated herein within modules and may be embodied in any suitable form and organized within any suitable type of data structure. This operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing code. The storage device may be, for example, but need not necessarily be, an electronic, magnetic, optical, electromagnetic, infrared, holographic, micromechanical, or semiconductor system, apparatus, or device, or any suitable combination of the foregoing.

A non-exhaustive list of more specific examples of the storage device would include the following: an electrical connection having one or more wires, a portable computer diskette, a hard disk, random access memory (RAM), read-only memory (ROM), erasable programmable read-only memory (EPROM or Flash Memory), portable compact disc read-only memory (CD-ROM), an optical storage device, a magnetic storage device, or any suitable combination of the foregoing. In the context of this document, a computer-readable storage medium may be any tangible medium that can contain or store a program for use by or in connection with an instruction execution system, apparatus, or device.

Code for carrying out operations for embodiments may include any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may be executed entirely on the user's computer, partly on the user's computer, as a stand-alone software package, partly on the user's computer and partly on a remote computer or entirely on the remote computer or server. In the very last scenario, the remote computer may be connected to the user's computer through any type of network, including a local area network (LAN) or a wide area network (WAN), or the connection may be made to an external computer (for example, through the Internet using an Internet Service Provider).

Reference throughout this specification to "one embodiment", "an embodiment", or similar language means that a particular feature, structure, or characteristic described in connection with the embodiment is included in at least one embodiment. Thus, appearances of the phrases "in one embodiment", "in an embodiment", and similar language throughout this specification may, but do not necessarily, all refer to the same embodiment, but mean "one or more but not all embodiments" unless expressly specified otherwise. The terms "including", "comprising", "having", and variations thereof mean "including but are not limited to", unless otherwise expressly specified. An enumerated listing of items does not imply that any or all of the items are mutually exclusive, otherwise unless expressly specified. The terms "a", "an", and "the" also refer to "one or more" unless otherwise expressly specified.

Furthermore, described features, structures, or characteristics of various embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid any obscuring of aspects of an embodiment.

Aspects of different embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general purpose computer, special purpose computer, or other programmable data processing apparatus to produce a machine, such that the instructions, which are executed via the processor of the computer or other programmable data processing apparatus, create means for implementing the functions specified in the schematic flowchart diagrams and/or schematic block diagrams for the block or blocks.

The code may also be stored in a storage device that can direct a computer, other programmable data processing apparatus, or other devices, to function in a particular manner, such that the instructions stored in the storage device produce an article of manufacture including instructions which implement the function specified in the schematic flowchart diagrams and/or schematic block diagrams block or blocks.

The code may also be loaded onto a computer, other programmable data processing apparatus, or other devices, to cause a series of operational steps to be performed on the computer, other programmable apparatus or other devices to produce a computer implemented process such that the code executed on the computer or other programmable apparatus provides processes for implementing the functions specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that in some alternative implementations, the functions noted in the block may occur out of the order noted in the Figures. For example, two blocks shown in succession may substantially be executed concurrently, or the blocks may sometimes be executed in the reverse order, depending upon the functionality involved. Other steps and methods may be conceived that are equivalent in function, logic, or effect to one or more blocks, or portions thereof, to the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each Figure may refer to elements of proceeding figures. Like numbers refer to like elements in all figures, including alternate embodiments of like elements.

Reference will now be made in detail to some embodiments of the present application, examples of which are illustrated in the accompanying drawings. To facilitate understanding, embodiments are provided under specific network architecture and new service scenarios, such as 3GPP 5G, 3GPP LTE, 3GPP NR-U, NR Radio Access operating with shared spectrum channel access and so on. It is contemplated that along with the developments of network architectures and new service scenarios, all embodiments in the present application are also applicable to similar technical problems. Moreover, the terminologies recited in the present application may change, which should not affect the principle of the present application. Embodiments of the present disclosure can also be applied to unlicensed spectrum scenario.

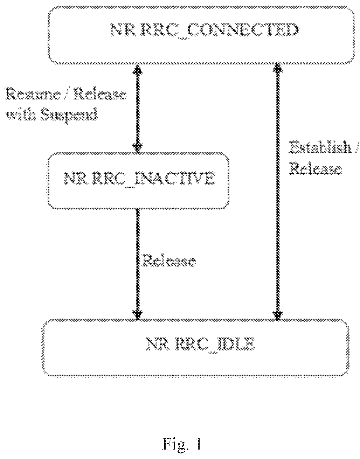

Fig. 1 illustrates the RRC states in NR.

The RRC protocol is used in the air interface. It exists only in the control plane, in the UE and in the gNB. The major functions of the RRC protocol include connection establishment and release functions, broadcast of system information, RB establishment, reconfiguration and release, RRC connection mobility procedures, paging notification and release and outer loop power control. By means of the signaling functions, the RRC configures the user and control planes according to the network status and allows for Radio Resource Management strategies to be implemented.

The behavior and functions of RRC are governed by the current state of RRC. In 5G NR, RRC has three distinct states: RRC_IDLE, RRC_CONNECTED and RRC_INACTIVE.

RRC_IDLE : Upon power on, UE enters into RRC_IDLE mode. UE may move to this mode from either RRC_CONNECTED mode or RRC_INACTIVE mode.

RRC_INACTIVE: UE moves to this mode from RRC_CONNECTED mode. It is connected but inactive mode of UE. In this mode, UE maintains RRC connection and at the same time minimizes signaling and power consumption.

RRC_CONNECTED: UE remains in connection with the 5G-RAN/5GC in this mode.

For MTC and IoT applications, it is typical for devices to send small amounts of data. The overhead in establishing an RRC connection to do this is inefficient from a power perspective. The extra signaling also introduces delay.

Since 5G caters to new cases such as mMTC and URLLC, RRC_INACTIVE has been introduced. While entering this state, both UE and NG-RAN save radio and security configurations. This saved UE Inactive AS context can be quickly restored with minimal signaling when moving to connected state.

RRC states transition process is shown in Fig. 1.

RRC_IDLE to RRC_CONNECTED happens via the RRC Connection Setup procedure. This transition consists of three messages: *RRCSetupRequest* (UE initiated), *RRCSetup,* and *RRCSetupComplete.*

RRC_CONNECTED to RRC_IDLE is via RRC Connection Release procedure with network-initiated *RRCRelease* message. Upper layers in the UE may also request a release. RRC connection is also released due to radio link failure, handover failure or cell not meeting cell selection criteria.

RRC_CONNECTED to RRC_INACTIVE is network initiated. It is entered via *RRCRelease* message with *suspendConfig* IE.

RRC_INACTIVE to RRC_CONNECTED is triggered by the network via RAN paging. A paged UE will start with RRC Connection Resume procedure consisting of three messages: *RRCResumeRequest, RRCResume* (or *RRCSetup), RRCResumeComplete* (or *RRCSetupComplete*). This procedure can also be initiated by UE for uplink transmission, including RNA update.

RRC_INACTIVE to RRC_IDLE happens when network responds to *RRCResumeRequest* with *RRCRelease.*

The main principle of the inactive state is that the UE is able to return to the connected state as quickly and efficiently as possible. When the UE transforms to inactive, both the UE and the RAN store all the information necessary to quickly resume the connection. The message that transforms the UE to inactive state contains a set of parameters used for inactive state operation, such as a RAN Notification Area within which the UE is allowed to move without notifying the network. Further, it includes parameters used for secure transition back to the connected state, such as a UE identifier and security information needed to support encrypted resume messages.

An inactive UE may initiate a resume procedure when there is a need to transmit data or signaling, for example. In this case, the UE transmits an RRC resume request that includes the UE identifier and a security token to verify the legitimacy of the resume request. After the UE configuration is successfully retrieved, the target node resumes the stored configuration at the UE and applies any necessary modifications, such as the configuration of measurements and the addition or removal of bearers. The respective RRC resume message is integrity protected and encrypted using the security context stored in the network and the UE.

SRBs are defined as radio bearers that are used for the transmission of RRC and NAS messages.

There are four different types of SRB in 5G NR defined as follows.

SRB0 is for RRC messages using the CCCH logical channel;

SRB1 is for RRC messages as well as for NAS messages prior to the establishment of SRB2 (which may include a piggybacked NAS message), all using DCCH logical channel;

SRB2 is for NAS messages, all using DCCH logical channel. SRB2 has a lower-priority than SRB1 and is always configured by the network after security activation;

SRB3 is for specific RRC messages when UE is in EN-DC, all using DCCH logical channel.

The default SRB configurations is listed in Table 1. As can be seen from the table, the default priority of SRB2 is lower than that of SRB1.

**[Table 1]**

| **Name** | **Value** | | | **Semantics description** | **Ver** |
|---|---|---|---|---|---|
| | SRB1 | SRB2 | SRB3 | | |
| *PDCP-Config* | | | | | |
| *>t-Reordering* | infinity | | | | |
| *RLC-Config* CHOICE | Am | | | | |
| *ul-AM-RLC* | | | | | |
| *>sn-FieldLength* | size12 | | | | |
| *>t-PollRetransmit* | ms45 | | | | |
| *>pollPDU* | infinity | | | | |
| *>pollByte* | infinity | | | | |
| *>maxRetxThreshold* | t8 | | | | |
| *dl-AM-RLC* | | | | | |
| *>sn-FieldLength* | size12 | | | | |
| *>t-Reassembly* | ms35 | | | | |
| *>t-StatusProhibit* | ms0 | | | | |
| *logicalChannelIdentity* | 1 | 2 | 3 | | |
| *LogicalChannelConfig* | | | | | |
| *>priority* | 1 | 3 | 1 | | |
| *>prioritisedBitRate* | infinity | | | | |
| *>logicalChannelGroup* | 0 | | | | |

It has been agreed that configuring of SRB1 and SRB2 for small data transmission for carrying RRC and NAS messages should be supported. Upon initiating RRC Resume procedure for SDT, i.e., for first SDT transmission, the UE shall also resume SRB2 that is configured for SDT, in addition to SDT DRBs that are configured for SDT.

For small data transmission, for RACH and CG based solutions, when the UE receives RRC release with *suspendConfig,* the UE at least performs the following actions: MAC is reset and default MAC cell group configuration is released, RLC entities for SRB1 are reestablished, SRBs and DRBs are suspended except SRB0.

For both RACH and CG based solutions, upon initiating RESUME procedure for SDT, the UE shall reestablish at least the SDT PDCP entities and resume the SDT DRBs that are configured for SDT (along with the SRB1).

The first UL message (i.e. MSG3 for 4-step RACH, MSGA payload for 2-step RACH and the CG transmission for CG) may contain at least the CCCH message.

Logical channel priority (LCP) may be used to determine to priority of DRB data from one or more DRBs which are configured by the network for SDT, MAC CEs (e.g. BSR).

The configuration of configured grant resource for UE uplink SDT is contained in the *RRCRelease* message. The configuration of configured grant resource may include one type 1 CG configuration.

A new TA timer for TA maintenance specified for configured grant based SDT in RRC_INACTIVE should be introduced. The TA timer is configured together with the CG configuration in the *RRCRelease* message.

The UE may use configured grant based SDT if at least the following criteria is fulfilled: (1) the volume of user data is smaller than the data volume threshold; (2) configured grant resource is configured and valid; (3) UE has a valid TA.

The stored configuration in the UE context is used for the RLC bearer configuration for any SDT mechanism (RACH and CG).

The 2-step RACH or 4-step RACH should be applied to RACH based uplink small data transmission in RRC_INACTIVE. The uplink small data may be sent in MSGA of 2-step RACH or in msg3 of 4-step RACH.

UL/DL transmission following UL SDT without transitioning to RRC_CONNECTED is supported.

When UE is in RRC_INACTIVE, it should be possible to send multiple UL and DL packets as part of the same SDT mechanism and without transitioning to RRC_CONNECTED on dedicated grant. After *RRCResumeRequest* and a first UL data are received by the network (e.g., gNB), the network may transmit *RRCRelease* with *suspend* to the UE for contention resolution.

For supporting low power targets in Rel-17, the UE is expected to perform DL positioning, including measuring PRS and reporting PRS measurements, when in RRC_INACTIVE mode. In this regard, certain enhancements may be considered to the SDT procedure for supporting CP forwarding of NAS messages. As per legacy RRC/NAS procedure, NAS messages can be carried in SRB1 before establishment of SRB2. The priority assigned to SRB1 is higher than SRB2. In some scenarios, it is possible for the positioning measurements reports to be sent in SRB1 so long as the UE has available resources after data included in SRB1, which includes RRC messages and other higher priority NAS messages. Since positioning measurement reports are typically assigned with low priority, they may not be carried in SRB1. To address this, NAS messages containing positioning measurement reports may be carried in SRB2 and multiplexed with other data in DRBs using legacy LCP procedure.

Hereafter, specific embodiments of the invention will be described with reference to figures. It should be appreciate that the following embodiments are merely examples of the concept of the present invention, rather than the only way in which the present invention can be implemented.

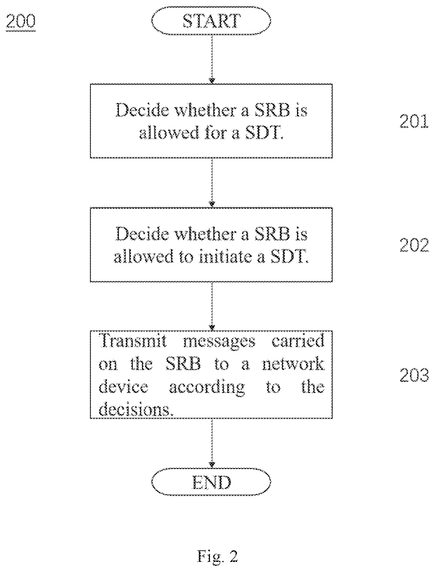

Fig. 2 illustrates a flowchart of a method performed by the terminal device according to an embodiment of the present invention.

According to prior art, how to handle SRB2 in SDT is ambiguous.

According to related standards, upon initiating RRC Resume procedure for SDT initiation, i.e. for first SDT transmission, the UE shall also resume SRB2 that is configured for SDT.

Therefore, one issue worth considering is how to define the SRB2 for carrying NAS messages regarding whether it is for SDT or non-SDT.

Regarding this issue, two cases need to be discussed separately.

Case #a: a SRB2 is configured for SDT, which is referred as SDT-SRB2. Without loss of generality, a SRB configured for SDT is referred as SDT-SRB in this application.

Case #b: a SRB2 is not configured for SDT or is configured with non SDT-SRB2, which is referred as non-SDT-SRB2 for both cases. Without loss of generality, a SRB not configured for SDT or configured with non SDT-SRB is referred as non-SDT-SRB in this application.

In the case that a SRB2 is configured for SDT, whether the SDT-SRB2 may initiate a SDT without multiplexing with any other SDT DRB data is not defined. And which messages may be transmitted with SDT-SRB2 needs to be discussed.

In the case that a SRB2 is not configured for SDT or is configured with non-SDT-SRB2, whether the non-SDT-SRB2 may be resumed upon initiating RRC Resume procedure for SDT initiation, i.e. for first SDT transmission needs to be discussed.

In addition, if the non-SDT-SRB2 may be resumed upon initiating RRC Resume procedure or during the SDT, whether messages on the non-SDT-SRB2 may be multiplexed with any other SDT DRB data needs to be discussed.

For the above mentioned issue, the invention proposes that whether a SRB is allowed for SDT may be configured by the network on a per RB basis. Specifically, whether a SRB is allowed for SDT may be configured by the network on a per SRB basis.

Further, SDT-SRB2, more generally SDT-SRB, carrying any NAS messages or carrying specific NAS messages, may be configured per UE. In other words, SDT-SRB may be configured based on the capability of a UE. For example, if a UE may report PRS measurement in RRC_IDLE/RRC_INACTIVE state or a UE has the capability of SDT or a UE has the capability of reporting PRS measurement in RRC_IDLE/RRC_INACTIVE state or a UE has the capability of transmitting control signaling in RRC_IDLE/RRC_INACTIVE state, SDT-SRB including SDT-SRB1, SDT-SRB2, or SDT-SRB3, and so on may be configured by the network for the UE.

For the Case #b, the SRB for carrying NAS messages or for carrying PRS measurement report or a UE has the capability of SDT or a UE has the capability of reporting PRS measurement in RRC_IDLE/RRC_INACTIVE state or a UE has the capability of transmitting control signaling in RRC_IDLE/RRC_INACTIVE state may not be configured with SDT or may be configured with non-SDT-SRB. In this case, the invention proposes that the non-SDT-SRB(s) may be resumed upon initiating RRC Resume procedure for SDT initiation, i.e. for first SDT transmission.

In addition, the SRB for carrying NAS messages or for carrying PRS measurement report or for carrying control signaling may not be transmitted with SRBs and/or DRBs allowed for SDT, and another legacy Resume procedure need to be initiated.

Alternatively, for the Case #b, the SRB for carrying NAS messages or for carrying PRS measurement report or for carrying control signaling may be transmitted via a SDT. For example, the SRB PDUs may be transmitted by multiplexing with the allowed SDT data or SDT DRBs. Here, allowed data means the data from the configured DRBs or SRBs or messages from upper layer which are allowed for SDT. Further, when the non-SDT-SRB is multiplexed with the allowed SDT data, the priority of the non-SDT-SRB data may be configured with a specific value/priority, for example, with a low priority.

Alternatively, for the Case #b, the non-SDT-SRB(s) may not be resumed. When the non-SDT-SRB(s) data arrival, a new indication may be transmitted to the network via a SDT. The new indication may be a PHY/MAC/RRC/NAS indication to indicate the arrival of the non-SDT-SRB(s) data. And the indication may be one bit (e.g., UCI message), a MAC CE or a RRC/NAS message.

Alternatively, a legacy Resume procedure is initiated when the non-SDT-SRB(s) data arrival.

Alternatively, it is up to the UE implementation to decide whether to continue the ongoing SDT procedure, or stop the SDT procedure and initial a legacy Resume procedure.

According to another embodiment, whether a SRB is allowed for SDT or the allowed message to be transmitted by SDT-SRB may be configured on a per message basis. For example, a SRB may be configured to allow SDT if the NAS message carried on the SRB is specific messages, PRS measurement report, TAU, specific control signaling, RNAU, etc.

Alternatively, whether a SRB is allowed for SDT or the allowed message to be transmitted by SDT-SRB may be configured on a per layer/protocol layer basis. For example, a SRB may be configured to allow SDT if the message carried on the SRB originates from NAS layer and/or RRC layer, etc.

Alternatively, a SRB may be configured to allow for SDT for any NAS messages. The allowed message to be transmitted by SDT-SRB may be any NAS messages.

For the embodiments described above, the SRB includes, but not limited to, SRB2. In other words, the SRB may be SRB0, SRB1, SRB2, SRB3, and the like. In addition, the SRB may be SRB2 or SRB2 which carries NAS messages or SRB2 which carries PRS measurement report. The same may be applied to the following embodiments.

For the embodiments described above, the UE may be in RRC_INAVTIVE state. Furthermore, the UE may be in non RRC_CONNECTED state, i.e., RRC_INAVTIVE state or RRC_IDEL state. The same may be applied to the following embodiments.

In the case that a SRB2 is configured for SDT, whether to allow the SRB2 to initiate a SDT without SDT DRB data arrival has not been defined.

Prior arts focus on the multiplexing with SDT DRB. Whether allowing the SRB2 to initiate a SDT without multiplexing with SDT DRB is unclear.

According to an embodiment, the SRB may be configured to allow for a SDT and allowed to initiate a SDT even without any SDT DRB data arrival.

As mentioned above, the SRB may be SRB2 or SRB2 which carries NAS messages or SRB2 which carries PRS measurement report or SRB2 which carries specific signaling. Further, the SRB may include at least SRB0, SRB1, SRB2, SRB3, and the like.

Alternatively, the SRB may be configured on a per RB basis to allow for SDT, but not allowed to initiate a SDT if there is not any data from SDT DRB. Here, configuring on a per RB basis may be on a per SRB basis, for example.

According to one embodiment, whether a SRB is allowed to initiate a SDT may be configured on a per message basis. For example, a SRB is configured to allow to initiate a SDT if the NAS message carried on the SRB is specific messages, PRS measurement report, TAU, specific control signaling, etc.

Alternatively, whether a SRB is allowed to initiate a SDT may be configured on a per layer/protocol layer basis. For example, a SRB may be configured to allow to initiate a SDT if the message carried on the SRB originates from NAS layer.

According to the solutions described above, a UE in the non RRC_CONNECTED state with messages to be transmitted to the network may perform the method 200 as shown in Fig. 2.

The procedure is started by a UE in the non RRC_CONNECTED state.

At step 201, the UE decides whether a SRB is allowed for SDT. According the description above, whether a SRB is allowed for SDT may be configure by the network on a per message basis or on a per RB basis.

The decision result may be that the SRB is configured for SDT as a SDT-SRB, or the SRB is not configured for SDT as a non-SDT-SRB.

Next, at step 202, the UE decides whether the SRB is allowed to initiate a SDT. According the description above, whether a SRB is allowed to initiate a SDT may be configure by the network on a per message basis or on a per RB basis.

The decision result at step 202 may be that the SRB is allowed to initiate a SDT even without any SDT DRB data arrival, or the SRB is not allowed to initiate a SDT if there is not any data from SDT DRB.

At step 203, the UE transmits the message to the network based on the decisions at steps 201 and 202. For example, the message may be transmitted on a SDT-SRB via a SDT initiated by the SRB, on a SDT-SRB via a SDT initiated by the SDT-DRB, on the non-SDT-SRB by multiplexing with the allowed SDR data or SDT DRBs, or on the non-SDT-SRB via a legacy procedure.

In the above embodiments, it has been described that SRB may be configured to allow to initiate a SDT even without any SDT DRB data arrival. Hereafter, the criteria for a SRB to initiate a SDT will be described.

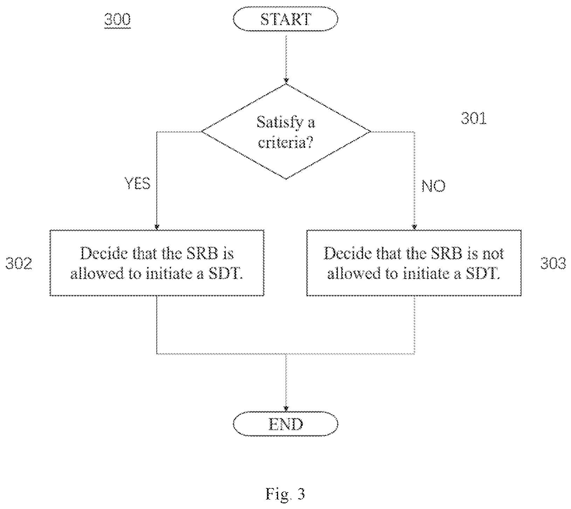

Fig. 3 illustrates a flowchart for a UE to decide whether a SRB may be configured to allow to initiate a SDT according to embodiments of the invention.

The procedure 300 is started by a UE in the non RRC_CONNECTED state.

At step 301, the UE decides whether the criteria for SRB to initiate a SDT are satisfied.

If the criteria are satisfied (YES at step 301), the process goes to step 302, otherwise (NO at step 301), the process goes to step 303.

At step 302, the UE decides that the SRB is allowed to initiate a SDT.

At step 303, the UE decides that the SRB is not allowed to initiate a SDT.

The criteria for SRB to initiate a SDT will be described specially below.

As mentioned above, for supporting low power targets in Rel-17, the UE is expected to perform DL positioning, including measuring PRS and reporting PRS measurements, when in RRC_INACTIVE mode. Reducing the positioning latency is one of the requirements. Specifically, the latency reduction is related to the reporting and request of the measurement (e.g., via RRC signaling, MAC-CE and/or physical layer procedure, and/or priority rules). The latency reduction is also related to the reporting and request of positioning assistance data (e.g., via location scheduling in advance of the time of when the location is needed).

Therefore, the latency requirement of positioning measurement report (for example, SRB2 initiated SDT) is relatively high. While the latency requirement of SDT DRBs may be relatively relaxed. If the SDT resources are configured according to the traffic characteristic of SDT DRBs, the resources may not meet the requirements of SDT SRB (positioning measurement reports).

In the case that a SRB is configured for SDT, the criteria for a SRB to initiate a SDT at least include that the SRB data arrives earlier than the SDT UL resource by a time interval which is less than a threshold. If the criteria are satisfied, the SRB may initiate a SDT; otherwise, the SRB may initiate a legacy resume procedure.

For example, when the SRB2 (or SRB1 and/or SRB2) data arrives at slot A, and the next available SDT UL resource (e.g. PRACH occasion, configured MsgA PUSCH occasion, CG occasion) is at slot B, if B-A < = a threshold, the SRB2 may initiate a SDT. Needless to say, B-A should be larger than the UE processing time.

According to another embodiment, when deciding whether to initiate a SDT, the arrival data volume of configured SDT DRBs may be included/counted, while the arrival data volume of SRB may not be included/counted, if the SRB is not allowed to initiate the SDT without DRBs for the SDT or the SRB is allowed to initiate the SDT without DRB for the SDT.

Alternatively, when deciding whether to initialize a SDT, the arrival data volume of SRB may not be included/counted and the arrival data volume of DRBs which are configured to allow for SDT may be included/counted if the SDT is configured to be initiated only by DRBs for the SDT.

Alternatively, when deciding whether to initialize a SDT, the arrival data volume of SRBs which are configured to allow for SDT and the arrival data volume of DRBs which are configured to allow for SDT may be included/counted.

Alternatively, when deciding whether to initiate a SDT, only the arrival data volume of SRBs which are configured to allow for SDT may be included/counted.

Alternatively, when deciding whether to initialize a SDT, only the arrival data volume of DRBs which are configured to allow for SDT may be included/counted.

If the data volume of SRB or DRB is smaller than a specific data volume threshold, a SDT will be initiated. The SRB here and above may be SRB2, or SRB1 and/or SRB2, or SRB1 and/or SRB2 and/or SRB3, or the configured specific messages.

According to another embodiment, a timer for SRB (or SRB2, or SRB1 and/or SRB2, or SRB1 and/or SRB2 and/or SRB3,or the configured specific messages) may be defined. Once the SRB data arrives, the timer is started. If SDT UL resource arrives and the timer is running, the data is transmitted by be initiating a SDT or multiplexing the SRB data with other data. If the timer expires, a legacy resume procedure may be initiated.

The criteria for SRB to initiate a SDT are not limited to the above, other criteria are possible.

For the embodiments, whether the SRB2 is a specifical SRBS for SDT or a normal SRB2 is not defined.

Since the priority of SRB2 may be higher or lower than the priority of SDT-DRB, it will impact on the LCP procedure and further impact on the decision of whether to initiate a SDT. For example, the lower priority SRB data may not be transmitted with the SDT DRBs.

According to one embodiment, a SRB2 specific to SDT may be configured, and the priority of the logical channel should be higher/lower than the SDT-DRB. The priority may be higher/lower than all the DRBs which are configured to allow SDT, or it may be configured to the highest/lowest/specified priority, or it may be applied with a default dedicated configuration of the highest/lowest/specified priority.

The SDT-SRB2 configuration may be included in the *RRCRelease* message with *suspendConfig.*

Correspondingly, the SDT configuration request message may indicate the request for SDT-SRB2, which is an explicit request. And/or it may be based on UE capability, which is an implicit request.

According to another embodiment, the SRB2 may be configure as a normal SRB2. For example, a SRB (SRB2, or SRB1 and/or SRB2, or SRB1 and/or SRB2 and/or SRB3) is configured by the network and used when in RRC_CONNECTED state. And in this embodiment, the SRB (SRB2, or SRB1 and/or SRB2, or SRB1 and/or SRB2 and/or SRB3) may be resumed and continued to use when the UE is in RRC_INACTIVE/RRC_IDLE state. In this case, it needs to guarantee the priority is higher/lower than the SDT-DRB or a specified priority. For example, the priority of SRB2 may be decreased temporarily when the UE is performing SDT. When the UE enters the RRC_CONNECTED state, the priority of the SRB may be resumed.

In the case that the SRB2 is a normal SRB2, LCP may be used to guarantee the priority is higher/lower than the SDT-DRB.

For example, logical channels may be prioritized in accordance with the following order (highest priority listed first):
- C-RNTI MAC CE or data from UL-CCCH;
- Configured Grant Confirmation MAC CE or BFR MAC CE or Multiple Entry Configured Grant Confirmation MAC CE;
- Sidelink Configured Grant Confirmation MAC CE;
- LBT failure MAC CE;
- MAC CE for SL-BSR prioritized according to clause 5.22.1.6;
- MAC CE for BSR, with exception of BSR included for padding;
- Single Entry PHR MAC CE or Multiple Entry PHR MAC CE;
- MAC CE for the number of Desired Guard Symbols;
- MAC CE for Pre-emptive BSR;
- MAC CE for SL-BSR, with exception of SL-BSR prioritized according to clause 5.22.1.6 and SL-BSR included for padding;
- data from any Logical Channel, except data from UL-CCCH when UE is in RRC_CONNECTED state;
- data from UL logical channel corresponding to SRB2 during SDT (This case correspond to the priority of SRB2 is higher than the SDT-DRB. This is just one example, and the priority may be higher than this value.);
- data from any Logical Channel, except data from UL-CCCH, except data from UL logical channel corresponding to SRB2 when UE is in RRC_INACTIVE/IDLE state;
- data from UL logical channel corresponding to SRB2 during SDT (This case correspond to the priority of SRB2 is lower than the SDT-DRB. This is just one example, and the priority may be lower than this value.);
- MAC CE for Recommended bit rate query;
- MAC CE for BSR included for padding;
- MAC CE for SL-BSR included for padding.
- The priority order is just an example. Other priority order is also possible.

Further, LCP may be used to determine to priority of:
- DRB data from one or more DRBs which are configured by the network for SDT;
- MAC CEs (e.g. BSR);
- SRB data which is configured to be transmitted during SDT;
- Padding bits.

With the solutions described above, technical problems, such as whether a SRB is for SDT, whether a SRB may initiate a SDT, the criteria for a SRB to initiate a SDT, whether a SRB is specific to SDT or a normal SRB, and the like, have been solved.

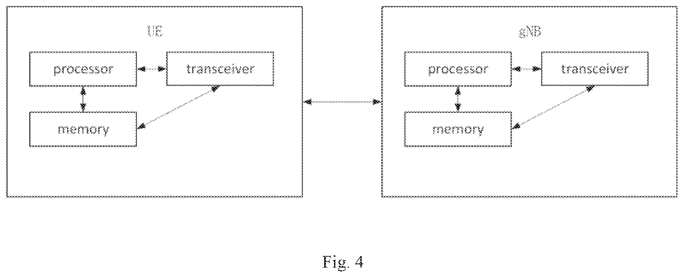

Fig. 4 is a schematic block diagram illustrating apparatuses according to one embodiment. Referring to Fig. 4, the UE (i.e., the terminal device) includes a processor, a memory, and a transceiver. The processor implements a function, a process, and/or a method which are described above.

The user equipment (UE) comprises a processor configured to decide whether a SRB is allowed for SDT, decide whether the SRB is allowed to initiate a SDT, and control the transceiver to transmit the message to the network based on the decisions.

The details of the operation of the UE have been described above.

Layers of a radio interface protocol may be implemented by the processors. The memories are connected with the processors to store various pieces of information for driving the processors. The transceivers are connected with the processors to transmit and/or receive a radio signal. Needless to say, the transceiver may be implemented as a transmitter to transmit the radio signal and a receiver to receive the radio signal.

The memories may be positioned inside or outside the processors and connected with the processors by various well-known means.

Referring to Fig. 4, the gNB (i.e., the network device) includes a processor, a memory, and a transceiver. The processor implements a function, a process, and/or a method which are described above.

The operations performed on the gNB side correspond to the operations performed on the UE side. For details, please refer to the description above.

With the solutions in the present invention, the network may configure whether a SRB is allowed to do SDT, the criteria for a SRB to initiate a SDT are defined, and the configuration of the SRB for SDT is defined, and therefore the SRB data transmitted as SDT is supported.

In the embodiments described above, the components and the features of the embodiments are combined in a predetermined form. Each component or feature should be considered as an option unless otherwise expressly stated. Each component or feature may be implemented not to be associated with other components or features. Further, the embodiment may be configured by associating some components and/or features. The order of the operations described in the embodiments may be changed. Some components or features of any embodiment may be included in another embodiment or replaced with the component and the feature corresponding to another embodiment. It is apparent that the claims that are not expressly cited in the claims are combined to form an embodiment or be included in a new claim.

The embodiments may be implemented by hardware, firmware, software, or combinations thereof. In the case of implementation by hardware, according to hardware implementation, the exemplary embodiment described herein may be implemented by using one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and the like.

Embodiments may be practiced in other specific forms. The described embodiments are to be considered in all respects to be only illustrative and not restrictive. The scope of the invention is, therefore, indicated in the appended claims rather than by the foregoing description.

## Claims

1. An apparatus for wireless communication, comprising:
at least one memory; and
at least one processor coupled with at least one memory and configured to cause the apparatus to:
make (201) a first decision regarding whether a signaling radio bearer, SRB, is allowed for small data transmission, SDT;
make (202) a second decision regarding whether the SRB is allowed to initiate the SDT; and
transmit (203) messages carried on the SRB to a network device according to the first and second decisions,
wherein the apparatus is in a non Radio Resource Control, RRC,_CONNECTED state with the network device, and
wherein criteria for whether the SRB initiates the SDT include at least that user data volume is smaller than a data volume threshold, wherein calculation of the user data volume includes not counting in the data volume of SRB if the SDT is configured to be initiated only by data radio bearers, DRBs, for the SDT.

2. The apparatus of claim 1, wherein if the SRB is not configured for the SDT according to the first decision, the messages to be carried on the SRB are transmitted by multiplexing with an allowed data for the SDT or DRBs for the SDT.

3. The apparatus of claim 1, wherein criteria for whether the SRB initiates the SDT include at least that the data for the SRB arrives earlier than an uplink, UL, resource for the SDT by a time interval less than a threshold.

4. The apparatus of claim 1, wherein criteria for whether the SRB initiates the SDT include at least defining a timer for SRB, wherein once a data for the SRB arrives, the timer is started, and if UL resource for the SDT arrives, the data is transmitted depending on the state of the timer.

5. The apparatus of claim 1, wherein the SRB is SRB2.

6. A method (200), performed by an apparatus, for wireless communication, comprising:
making (201) a first decision regarding whether a signaling radio bearer, SRB, is allowed for small data transmission, SDT;
making (202) a second decision regarding whether the SRB is allowed to initiate the SDT; and
transmitting (203) messages carried on the SRB to a network device according to the first and second decisions,
wherein the apparatus is in a non Radio Resource Control, RRC_CONNECTED state with the network device, and
wherein criteria for whether the SRB initiates the SDT include at least that user data volume is smaller than a data volume threshold, wherein calculation of the user data volume includes not counting in the data volume of SRB if the SDT is configured to be initiated only by data radio bearers, DRBs, for the SDT.

7. The method of claim 6, wherein whether the SRB is allowed for the SDT is configured by the network on a per message to be carried on the SRB basis or on a per radio bearer, RB, basis.

8. The method of claim 7, wherein whether the SRB is allowed to initiate the SDT has been configured by the network on a per message to be carried on the SRB basis or on a per RB basis.

9. The method of claim 8, wherein the SRB is configured to allow for the SDT and allowed to initiate the SDT even without any DRBs data arrival for the SDT.

10. The method of claim 8, wherein the SRB is configured to allow for the SDT, but not allowed to initiate the SDT if there is not any data arrival from DRBs for the SDT.

11. The method of claim 7, wherein the SRB specific for the SDT is configured by the network.

12. The method of claim 7, comprising requesting a configuration for the SRB allowed for the SDT implicitly or explicitly.

13. The method of claim 12, wherein an implicit request includes at least the apparatus capability with indication of SRB based SDT.

## Patentansprüche

1. Vorrichtung zur drahtlosen Kommunikation, umfassend:
mindestens einen Speicher; und
mindestens einen Prozessor, der mit mindestens einem Speicher gekoppelt und dazu konfiguriert ist, die Vorrichtung zu Folgendem zu veranlassen:
Treffen einer ersten Entscheidung (201) darüber, ob ein Signalisierungsfunkträger (SRB) zur Übertragung kleiner Datenmengen (SDT) zugelassen ist;
Treffen einer zweiten Entscheidung (202) darüber, ob der SRB die SDT initiieren darf; und
Übertragen (203) von auf dem SRB übermittelten Nachrichten an ein Netzwerkgerät entsprechend der ersten und zweiten Entscheidung,
wobei sich die Vorrichtung in einem nicht per Funkressourcensteuerung verbundenen (RRC) _CONNECTED Zustand gegenüber dem Netzwerkgerät befindet, und
wobei die Kriterien dafür, ob der SRB die SDT initiiert, mindestens beinhalten, dass das Nutzdatenvolumen kleiner ist als ein Datenvolumen-Schwellenwert, wobei bei der Berechnung des Nutzdatenvolumens das Datenvolumen des SRB nicht mitgezählt wird, wenn die SDT so konfiguriert ist, dass sie nur von Datenfunkträgern (DRB) zur SDT initiiert wird.

2. Vorrichtung nach Anspruch 1, wobei, falls der SRB gemäß der ersten Entscheidung nicht zur SDT konfiguriert ist, die auf dem SRB zu übermittelnden Nachrichten durch Multiplexen mit zulässigen Daten zur SDT oder mit DRB zur SDT übertragen werden.

3. Vorrichtung nach Anspruch 1, wobei die Kriterien dafür, ob der SRB die SDT initiiert, mindestens beinhalten, dass die Daten für den SRB früher als eine Uplink-Ressource (UL) zur SDT eintreffen, und zwar um ein Zeitintervall, das kleiner als ein Schwellenwert ist.

4. Vorrichtung nach Anspruch 1, wobei die Kriterien dafür, ob der SRB die SDT initiiert, mindestens Definieren eines Zeitgebers für den SRB umfassen, wobei der Zeitgeber gestartet wird, sobald Daten für den SRB eintreffen, und wenn eine UL-Ressource zur SDT eintrifft, die Daten in Abhängigkeit von dem Zustand des Zeitgebers übertragen werden.

5. Vorrichtung nach Anspruch 1, wobei der SRB ein SRB2 ist.

6. Durch die Vorrichtung ausgeführtes Verfahren (200) zur drahtlosen Kommunikation, umfassend:
Treffen einer ersten Entscheidung (201) darüber, ob ein Signalisierungsfunkträger (SRB) zur Übertragung kleiner Datenmengen (SDT) zugelassen ist;
Treffen einer zweiten Entscheidung (202) darüber, ob der SRB die SDT initiieren darf; und
Übertragen (203) von auf dem SRB übermittelten Nachrichten an ein Netzwerkgerät entsprechend der ersten und zweiten Entscheidung,
wobei sich die Vorrichtung in einem nicht per Funkressourcensteuerung verbundenen (RRC) _CONNECTED Zustand gegenüber dem Netzwerkgerät befindet, und
wobei die Kriterien dafür, ob der SRB die SDT initiiert, mindestens beinhalten, dass das Nutzdatenvolumen kleiner ist als ein Datenvolumen-Schwellenwert, wobei bei der Berechnung des Nutzdatenvolumens das Datenvolumen des SRB nicht mitgezählt wird, wenn die SDT so konfiguriert ist, dass sie nur von Datenfunkträgern (DRB) zur SDT initiiert wird.

7. Verfahren nach Anspruch 6, wobei durch das Netzwerk auf Grundlage jeder auf dem SRB zu übermittelnden Nachricht oder auf Grundlage jedes Funkträgers (RB) konfiguriert wird, ob der SRB zur SDT zugelassen ist.

8. Verfahren nach Anspruch 7, wobei durch das Netzwerk auf Grundlage jeder auf dem SRB zu übermittelnden Nachricht oder auf Grundlage jedes RB konfiguriert wurde, ob der SRB zum Initiieren der SDT zugelassen ist,

9. Verfahren nach Anspruch 8, wobei der SRB dazu konfiguriert ist, die SDT zuzulassen und das Initiieren der SDT sogar dann zuzulassen, wenn keine Daten von DRB zur SDT eintreffen.

10. Verfahren nach Anspruch 8, wobei der SRB dazu konfiguriert ist, die SDT zuzulassen, aber kein Initiieren der SDT zuzulassen, wenn keine Daten von DRB zur SDT eintreffen.

11. Verfahren nach Anspruch 7, wobei der für die SDT spezifische SRB durch das Netzwerk konfiguriert wird.

12. Verfahren nach Anspruch 7, umfassend Anfordern einer Konfiguration für den zur SDT zugelassenen SRB implizit oder explizit.

13. Verfahren nach Anspruch 12, wobei eine implizite Anforderung mindestens die Gerätefähigkeit mit Angabe eines SRB-basierten SDT beinhaltet.

## Revendications

1. Appareil de communication sans fil, comprenant :
au moins une mémoire ; et
au moins un processeur couplé à au moins une mémoire et configuré pour amener l'appareil à :
prendre (201) une première décision quant à savoir si un support radio de signalisation (SRB) est autorisé pour une transmission de petites données (SDT) ;
prendre (202) une deuxième décision quant à savoir si le SRB est autorisé à initier la SDT ; et
transmettre (203) des messages transportés sur le SRB à un dispositif réseau conformément aux première et deuxième décisions,
dans lequel l'appareil est dans un état de commande de ressource radio (RRC_CONNECTED) non connecté avec le dispositif réseau, et
dans lequel les critères permettant de déterminer si le SRB initie la SDT comprennent au moins le fait que le volume de données utilisateur est inférieur à un seuil de volume de données,
dans lequel le calcul du volume de données utilisateur exclut le volume de données du SRB si la SDT est configurée pour être initiée uniquement par des supports radio de données (DRB) pour la SDT.

2. Appareil selon la revendication 1, dans lequel si le SRB n'est pas configuré pour la SDT conformément à la première décision, les messages devant être transportés sur le SRB sont transmis par multiplexage avec des données autorisées pour la SDT ou des DRB pour la SDT.

3. Appareil selon la revendication 1, dans lequel les critères permettant de déterminer si le SRB initie la SDT comprennent au moins le fait que les données destinées au SRB arrivent avant une ressource de liaison montante (UL) pour la SDT, avec un intervalle de temps inférieur à un seuil.

4. Appareil selon la revendication 1, dans lequel les critères permettant de déterminer si le SRB initie la SDT comprennent au moins la définition d'un temporisateur pour le SRB, dans lequel, lorsque des données destinées au SRB arrivent, le temporisateur est démarré, et si une ressource UL pour la SDT arrive, les données sont transmises en fonction de l'état du temporisateur.

5. Appareil selon la revendication 1, dans lequel le SRB est SRB2.

6. Procédé (200) mis en œuvre par un appareil, pour une communication sans fil, comprenant :
prendre (201) une première décision quant à savoir si un support radio de signalisation (SRB) est autorisé pour une transmission de petites données (SDT) ;
prendre (202) une deuxième décision quant à savoir si le SRB est autorisé à initier la SDT ; et
transmettre (203) des messages transportés sur le SRB à un dispositif réseau conformément aux première et deuxième décisions,
dans lequel l'appareil est dans un état de commande de ressource radio (RRC_CONNECTED) non connecté avec le dispositif réseau, et
dans lequel les critères permettant de déterminer si le SRB initie la SDT comprennent au moins le fait que le volume de données utilisateur est inférieur à un seuil de volume de données,
dans lequel le calcul du volume de données utilisateur exclut le volume de données du SRB si la SDT est configurée pour être initiée uniquement par des supports radio de données (DRB) pour la SDT.

7. Procédé selon la revendication 6, dans lequel l'autorisation ou non du SRB pour la SDT est configurée par le réseau sur la base de chaque message devant être transporté sur le SRB, ou sur la base de chaque support radio (RB).

8. Procédé selon la revendication 7, dans lequel l'autorisation ou non de l'initiation de la SDT par le SRB est configurée par le réseau, sur la base de chaque message devant être transporté sur le SRB, ou sur la base de chaque RB.

9. Procédé selon la revendication 8, dans lequel le SRB est configuré pour permettre la SDT et est autorisé à initier la SDT même en l'absence d'arrivée de données DRB pour la SDT.

10. Procédé selon la revendication 8, dans lequel le SRB est configuré pour permettre la SDT, mais n'est pas autorisé à initier la SDT en l'absence d'arrivée de données provenant des DRB pour la SDT

11. Procédé selon la revendication 7, dans lequel le SRB spécifique à la SDT est configuré par le réseau.

12. Procédé selon la revendication 7, comprenant une demande de configuration pour le SRB autorisé pour la SDT, de manière implicite ou explicite.

13. Procédé selon la revendication 12, dans lequel une demande implicite comprend au moins la capacité de l'appareil comportant une indication d'une SDT basée sur un SRB.
